# EUROPEAN PATENT SPECIFICATION

(11) **EP 3 260 559 B1**
(45) Date of publication and mention of the grant of the patent: **08.01.2020**
(21) Application number: 16708430.0
(22) Date of filing: 28.01.2016
(51) Int. Cl.: C22B 1/02, B01J 19/12, C22B 9/22, C22B 4/00, C22B 4/08

(54) **SELECTIVE PROCESS FOR THE EXTRACTION OF MINERALS FROM CRUDE ORES AND APPARATUS FOR CARRYING OUT THE PROCESS**
SELEKTIVER PROZESS ZUR GEWINNUNG VON METALLEN AUS EINEM ROH-MINERAL SOWIE VORRICHTUNG ZUR DURCHFÜHRUNG DES VERFAHRENS
PROCESSUS SÉLECTIF POUR L'EXTRACTION DE MÉTAUX DE MINERAIS BRUTS ET APPAREIL POUR RÉALISER CE PROCESSUS

(30) Priority: 09.02.2015 ES 201530151
(43) Date of publication of application: 27.12.2017
(73) Proprietor: Innceinnmat, S.L., 12100 Cast. de la Plana (ES)
(72) Inventor: LOPEZ BUENDIA, Ángel Miguel, 46100 Burjassot (Valencia) (ES); URQUIOLA, María del Mar, 46100 Burjassot (Valencia) (ES)
(74) Representative: Carvajal y Urquijo, Isabel
(86) International application number: PCT/ES2016/070049
(87) International publication number: WO 2016/128596

(56) References cited:
- EP-A1- 2 628 809
- WO-A1-2008/147420
- US-B1- 6 277 168

## Description

### Field of the invention

The present invention has application in the field of pyrometallurgical processes for extracting metals, mining and materials recycled from concentration stages to those of refining and purification.

### Background of the invention

Calcination, roasting and fusion processes are common pyrometallurgical metal extraction processes. These processes require heat treatments that make it possible to induce the mineralogical transformation of metal ores by means of chemical decomposition, reduction or oxidation reactions. Pyrometallurgical processes have high energy requirements because the heat treatments applied to the assembly formed by the ore and gangue mineral and the reactions that occur are not sufficiently selective. Currently, heat treatments are rare in the stages of concentration and enrichment, being usually reserved for the more advanced stages of refining and purification, although these treatments are usually complex and expensive, making it possible to obtain the metal in a higher state of purity.

Currently, the extraction of metals such as iron, nickel, tin, copper, gold or silver usually includes one or more stages involving pyrometallurgical methods. Metallurgical methods such as hydro-, bio-, electro- or pyro-metallurgy do not fully meet current demands for concentrating and processing metals in complex polymetallic or monometallic ores with poly-mineral phases, low-grade deposits, so-called rare metals and dump, industrial or electronic waste.

Microwave technology applied to minerallurgy appeared as a method of industrial interest in the 1990s. Its interest has grown over time (Bobicki et al. "Microwave heating of ultramafic nickel ores and mineralogical effects." Minerals Engineering, 2014 Vol. 58, 22-25). However, its extensive application is still limited, conditioned mainly by advances in instrumentation, manufacturing materials, microwave applicator modelling and the heterogeneity of minerals and complexity of the physical and chemical interactions that occur with electromagnetic fields.

Mineral interactions with electromagnetic fields are based on several phenomena, some of which are not yet well known. In metals, thermal microwave processes are related to the Joule effect (Yoshikawa, "Recent Studies on Fundamentals and Application of Microwave Processing of Materials. Advances in Microwave Heating and Induction of Mineral and Organic Materials", S. Grundas, Ed., Croatia, Intech Open Publisher, 2011, pp. 1-26). However, in other mineral components, whether original phases or mineral transformation phases formed during the microwave treatment, other phenomena such as dipolar or ionic occur, in addition to other less known phenomena. There is currently insufficient knowledge to explain all the thermal and non-thermal phenomena generated during microwave treatment.

The microwave units most widely used in the industry are multimode applicators that work in the entire electromagnetic field of microwaves indiscriminately and without selecting a preferred wave propagation path. These multimode solutions have inhomogeneous electromagnetic field distribution and low power density. They do not make it possible to concentrate energy in specific regions within the applicator, due to which they have a very limited ability to reach reaction temperatures in industrial processes. Because of their simple design and operation they are more widely used in other lower-temperature applications. On the contrary, single mode microwave applicator solutions make it possible to concentrate energy with sufficient intensity, although due to their complex design and the variables on which they depend, high-temperature single mode applicators are limited to discontinuous processes and at laboratory scale. Currently these applicators focus exclusively on heating with the electrical component.

In general, although the potential of microwaves is very significant and static laboratory units have reached relatively high temperatures, solid industrial applications are still far from their reaching their full capacity. This is particularly true at temperatures above 600°C; either because the device is inefficient or because the method is unstable, with heterogeneous treatment and insufficient control over the reactions that occur. The complexity of the design of the applicators, filters, continuous treatment means and the still limited knowledge of the interactions and behavior of materials with electromagnetic fields limit their use.

Dielectric heating is the most common and sought heating in microwaves and, therefore, the effect of applying the electric field (E-field) in the treatment of materials is better known. Heating induced by means of E-field depends on the complex dielectric permittivity of each material and that of its components, which is characteristic and also varies with temperature. Dielectric heating is effective for heating a large number of materials (susceptors) but when there is a large difference in the complex dielectric permittivity of the components that form a compound, as in the case of the presence of high-susceptance metals with other low-susceptance metals, known phenomena that generate overheating ("hot spots") and uncontrolled reactions ("runaway") all too easily, making it difficult to or impeding control of the reactions and homogeneous treatments in the vast majority of metal ores and metal-containing materials. These significant differences, which have occasionally been cited as a theoretical selective advantage, are a major drawback which has effectively limited their industrial application and impeded the proper treatment of materials with metallic ores with microwaves.

The effect of the heating induced by the magnetic component of the microwaves (H-field) on a material is proportional to the parameter called complex magnetic permeability; it is also characteristic of each material and varies with temperature. Heating induced by the effect of the H-field generates new properties and enables greater control of heating in metals and in the reactions produced. However, applicators for the industry that work in the dominant H-field for the treatment of metals, as proposed in the present invention, are not known in the art.

Application CN 103447148 relates to a device wherein the chemical reduction of hematite to magnetite ore is carried out by heating in a chamber to which microwaves are applied, and which is performed after previously heating the material in a combustion chamber. The chemical transformation of reduction with heating (called roasting) of hematite to magnetite is traditionally used in the industry to enable its magnetic separation from the gangue and its recovery as iron ore, but in the aforementioned application, microwave energy is applied as a source of energy.

This application differs from the previous method in that it uses a device which, by means of an applicator, directly performs a specific exposure to the magnetic component (H-field) of the microwave frequency. The specific exposure to the H-field enables the transformation of feeble magnetic hematite into magnetic hematite (ferromagnetic), without having to produce a chemical reduction. Moreover, when seeking enrichment or refining, chemical reactions induced by additives with susceptance to a specific field allow the control and applicability of the method in polymetallic ores.

Additionally, it does not affect the patentability of the invention because this method and devices cannot suggest the application of the present invention because it does not allow the design of the method, nor the separation of the electromagnetic field components, it does not allow the treatment of other metals other than iron oxides and much less that of polymetallic ores to extract their metallic components of commercial interest.

Application WO 9808989 A1 discloses a method of pyrite desulfurisation by oxidation with recirculation of the gases generated in a discontinuous process wherein microwave energy is used for heating, and wherein hematite and sulfur are obtained.

This application differs from the present invention in that it discloses a treatment process and devices that include the non-oxidative decomposition of sulphides, which is not restricted to pyrite, but rather includes metal and polymetallic sulphides as well as their possible mixtures that may be present, and for which purpose requires a specific exposure to the magnetic field (H-field) of the microwaves in a single mode applicator, and which in combination with other successive stages in the E- and EH-field enables the obtainment of metallic commercial components and solid sulfur.

It does not affect the patentability of the invention because the method of the application cannot suggest a process and treatment devices because it does not allow the separation of metal sulphides from different metals, does not allow the extraction and separation of the different metals in polymetallic sulphides and of combinations of other ores and does not allow a continuous industrialisable method.

Application US4906290 discloses a method for treating metal ores to obtain a precursor product for subsequent melting stages. The published method uses mineral ores or concentrates mixed with a carbonaceous compound (low-rank coals) which acts as a reducer as of a preparation in the form of pellets using microwave energy. The ores may contain oxides or sulphides which, after drying by action of the microwaves, will also experience a general reduction. It uses the known chemical transformation of reduction with heating (called roasting), traditionally used in the industry to concentrate metal using microwave energy to heat and initiate the reduction.

This application differs from the present invention in that a specific exposure to the magnetic field (H-field) is used, in addition to the possible exposure to the electric field (E-field) in different stages, enables a highly selective differential heating in only some metal components and gives rise to transformations of concentrate up to elemental metal levels. The stages of exposure to the specific fields individually make it possible to control the process, sequence the reactions and separate the products obtained.

Additionally, it does not affect the patentability of the invention since this method cannot suggest the application of the present invention or of its devices because it does not allow the reactions to be controlled by the reactions with the specific fields of the microwaves, reduction up to elemental metal and treatment of polymetallic ores to extract their metal components of commercial interest.

Relevant prior art is also disclosed in documents EP 2 628 809 A1, WO 2008/147420 A1 and US 6 277 168 B1.

These teachings are insufficient and fall short for continuous treatments using selective and controlled reactions in reproducible processes on an industrial scale in complex polymetallic and low-grade polymineral monometallic ores.

Magnetic separation is known and commonly used in mining and industrial processes to effectively concentrate magnetic minerals. However, the method for obtaining a phase with sufficient magnetic properties as of non-magnetically separable minerals (diamagnetic, some paramagnetic), is not easy to perform industrially. This is because multiple thermal, electrical, magnetic and chemical phenomena are generated and interact with each other, affecting the components of the ores themselves and their reactions with the additions.

The industrial problem to be solved is the obtainment of an industrialisable continuous process that will resolve the extraction of metals in complex polymetallic and low-grade polymineral monometallic ores, and will be a profitable and sustainable process.

In short, although mention has been made of the potential applications of microwave energy in mineral processes in the enrichment of some metals (iron, copper), a solution for a large amount of metals or that is industrial, reliable and robust is not known to exist, due mainly to the limitations of scale, efficiency and reproducibility and control of the applied fields, which have prevented its implementation on an industrial scale. The solution proposed by the present invention makes it possible to extract and concentrate the metal components of commercial interest from complex polymetallic and polymineral or low-grade monometallic ores on an industrial scale and in continuous processes.

### Description of the invention

The present invention is a selective method for extracting metals from a raw mineral that comprises a stage of electromagnetic heating of said raw mineral with microwaves in a dominant magnetic field, or H-field, open-ended single mode applicator followed by one of the two following options:
- an additional stage of dielectric heating with microwaves in the dominant electric field, or E-field, and/or a dielectric and magnetic heating stage simultaneous with microwaves in an alternating electric and magnetic field, or EH-field, both in a single mode applicator; or
- an additional dielectric and magnetic heating stage simultaneously with microwaves in an alternating electric and magnetic field, or EH-field, and a microwave heating stage in the dominant electric field, or E-field, both in a single model applicator;
and separation of the products obtained after each heating stage.

The method preferably allows continuous operation.

In another preferred aspect of the invention, said separation after each heating stage is a hot or cold magnetic separation of the products obtained due to the magnetic properties resulting from the treatment. This separator may also be a Foucault current separator or other equivalent means. In another preferred aspect, said separation can be performed using a density separator.

Metal extraction is understood to comprise one or more of its associated processes such as ore concentration, enrichment of metals, refining or purification. In these processes the raw mineral undergoes selective transformation that makes it possible to separate and extract the metal components with the highest value, giving rise to a new product.

In a preferred aspect of the invention, said raw mineral contains a polymetallic ore and/or a poly-mineral monometallic ore. In another preferred aspect this raw mineral is low-grade. In a further preferred aspect, said raw mineral is industrial waste.

Within the scope of the present invention, "raw mineral" is understood to be the rock, mining byproduct, industrial waste or intermediate product of the treatment susceptible of being processed, which contains a metallic ore in addition to gangue and which is previously particulate.

Within the scope of the present invention, "ore" or "metal ore" is understood to be a mineral aggregate of natural or artificial origin containing at least one metal.

Within the scope of the present invention, "polymetallic ores" is understood to be a mineral aggregate containing more than one metal in its constituent minerals.

Within the scope of the present invention, "polymineral monometallic ores" is understood to be a mineral aggregate containing one metal found in various mineral phases.

Within the scope of the present invention, "gangue" is understood to be a mineral or mineral aggregate containing no metals or that has a phase which is not economically profitable.

Within the scope of the present invention, "metal extraction" is understood to be the process whereby at least one metallic component of commercial interest is obtained from a previous less valuable raw mineral and comprises at least one of the recovery stages: concentration, enrichment, refining or purification.

Within the scope of the present invention, "concentration" of an ore is understood to be the process whereby an increase is obtained in said ore with respect to other ores and to the gangue. This concentration does not necessarily entail mineralogical transformation.

Within the scope of the present invention, "enrichment" of an ore is understood to be the process whereby an increase is obtained in the concentration of at least one of its metal components, which usually entails a transformation process of the mineral itself.

Within the scope of the present invention, "refining" of ores is understood to be the process whereby an increase occurs in the concentration of a metal for removing impurities.

Within the scope of the present invention, "purification" of ores is understood to be the process whereby an increase occurs in the concentration of a metal to up to high levels of metal concentration, which is normally greater than 85%.

Within the scope of the present invention, "dominant magnetic field" or "H-field" is understood to be the region of space where the relative intensity of the magnetic field of the microwaves represents more than 60% of the total electromagnetic field, such that the mineral receives most of electromagnetic energy as magnetic energy.

Within the scope of the present invention, "single mode" is understood to be the selection of one of the possible solutions of the electromagnetic field in the microwave chamber.

Within the scope of the present invention, "microwave applicator" is understood to be part of the system in which the raw mineral is treated and which consists of a microwave chamber and of the section of the transport unit that penetrates said chamber. The design of the assembly formed by the microwave chamber and the section of the transport unit determines the selection of exposure to the H-field, E-field or EH-field.

Within the scope of the present invention, "microwave chamber" is understood to be the conducting surface structure that has a specifically designed internal geometry, which confines the electromagnetic field in their interior and defines the electromagnetic field mode.

Within the scope of the present invention, "single mode microwave applicator" is understood to be that in whose microwave chamber, and by means of tuning, there is a single electromagnetic field mode. A peculiarity of this applicator is that it is resonant, wherein "resonant" is understood to be when the wave of one of the electromagnetic fields is in phase.

Within the scope of the present invention, the term "open-ended single mode microwave applicator" is understood to be that which has openings large enough to allow the entry and exit of the raw material and its transport means.

Within the scope of the present invention, "dominant electric field" or "E-field" is understood to be the region of space where the intensity of the electric field of the microwaves represents more than 60% of the total electromagnetic field, such that the mineral receives most of electromagnetic energy as electrical energy.

Within the scope of the present invention, "alternating electric and magnetic field" or "EH-field" is understood to be the region of space where the mineral is subjected to an alternating and consecutive sequence of H-field and E-field maximums in a single mode microwave applicator.

Additions of susceptor agents act as reducers and, likewise, reactive salts and gases in controlled atmospheres make it possible to complete the process design to separate the phases of interest. Such that another preferred aspect of the invention comprises adding carbon as a reducing component to said particulate ore prior to any microwave treatment stage. Most preferably, said carbon is graphite, humates, carbon black or carbonates. Another preferred aspect is that the method be carried out in a controlled atmosphere, even more preferably in an anoxic atmosphere in the presence of N₂ or CO₂.

Within the scope of the present invention, "controlled atmosphere" is understood to be an environment where the gas composition to which the raw mineral is exposed during treatment in the open-ended single mode microwave applicator has been modified by means of external inputs of inert gases or with known reactive gases.

Within the scope of the present invention, "anoxic atmosphere" is understood to be an environment in which the partial oxygen pressure is equivalent to zero.

During the treatment of raw mineral with sulphides in an anoxic atmosphere, sulfur is produced. Such that an additional preferable aspect comprises a stage of removal of elemental sulfur by condensation or solidification of the gases removed from this anoxic atmosphere. To this end, alkaline salts, alkaline earth and ammonium can be added previously to generate desulfurised metallic components and recoverable sulphates. Thus, the most preferable aspect comprises an additional stage of direct production of high purity elemental sulfur by means of a continuous process as of the cold gases (below 120°C) removed from the open-ended single mode applicator.

Another preferred aspect of the process is the additional application of an external static magnetic field to one or all of the stages of microwave treatment. This additional field maintains the magnetisation in the mineral and improves the preservation of the resulting magnetisation from the end of heating and during cooling until reaching the Curie or Neel temperature of the metallic mineral component. In minerals less sensitive to the magnetic field, immediate hot magnetic separation takes place. The method may comprise the coupling of magnets or electromagnets located at the outlet end of the applicator and in the cooling zone to preserve the resulting magnetisation in the mineral.

In yet another preferred aspect, the raw mineral passes through a rotating container tube. This tube that transports the mineral has a dielectric refractory behavior with low microwave susceptance.

In another preferred aspect, the single mode microwave applicator comprises radiation filters at the inlet and outlet ends. These filters confine the microwaves in the interior of the applicator and prevent leakage.

Within the scope of the present invention, "radiation filter" is understood to be a device capable of retaining radiation, keeping the level of leakage within the legal limits, according to the specifications of EC Directive 2004/40.

A highly preferable application of the present invention is a continuous process based on the application of selective electromagnetic fields (E-field and H field) or simultaneous alternating (EH-field) at microwave frequencies between 3 kHz and 300 GHz, corresponding to the so-called ISM bands (Industrial, Scientific and Medical). In a further preferred aspect, the frequency of use corresponds to those established at 2.45 GHz, 915 MHz, 433.92 MHz.

The thermal effect of each of the fields causes the selective heating of the mineral, which reaches a high temperature (normally between 300°C and 1,500°C) and gives rise to changes such as decomposition, reduction, oxidation, recrystallisation, fusion, etc. therein, as well as others that do not affect the mineral phase, for example, changes in the magnetic moments.

The use of a sequencing of electromagnetic fields (H-field, alternating EH-field and E-field), with a static magnetic field and option of continuous hot magnetic separation in a device implies the possibility of addressing impossible treatments to date, obtaining a specificity according to the component and making it possible to control the reactions.

The potential of the invention is based on the ability to perform a selective process, i.e. the possibility of generating a sequence of reactions and behaviors that affect the various components differently, in addition to being predictable, i.e. with the possibility of designing a process. The process is designed in accordance with the magnetic properties in the microwave frequency (complex magnetic permeability) and dielectric properties (complex dielectric permittivity) of the raw mineral and its constituent components that confer the polymetallic, poly-mineral and gangue variability of the raw mineral.

In the field of this invention, the energy used to initiate the reactions and generate changes in properties in the mineral components is provided by the specific exposure to one of the microwave fields. The exposure to the electromagnetic microwave field is the magnetic field (H-field) or in the electric field (E-field) or in a system that alternates E-field maximums and H-field maximums (EH-field), depending on the phenomenon to be enhanced.

By way of example, it can be expounded, in general, that the effect of the complex magnetic permeability of a component is manifested more effectively when exposed to the H-field. Thus, if the imaginary component of the complex magnetic permeability of a material is high, it suggests a more effective heating (or activation) with the H-field, such that those materials which have a very low imaginary component suffer a much milder heating (or activation). In a composite material it is evident that some are heated (or activated) differently and differentially with respect to others. Although with significant differences, this also occurs with complex dielectric permittivity.

The H-field exerts a selective effect on the raw mineral that contains complex ores, due to which it tends to produce more easily controllable reactions (e.g.: with less evidence of unwanted specific overheating phenomena), due to which many reactions that are not possible in an E-field are possible in an H-field. The EH-field is also selective in some cases with respect to the E-field and H-field. The configuration of the process and of the sequence of stages with specific fields (H-field, E-field or EH-field) makes it possible to predict and select the reactions of interest exclusively in certain minerals.

For an efficient design it is convenient to determine the dielectric permittivity and complex magnetic permeability properties of the raw mineral, of its components and the products of reaction at the temperatures at which they are to be treated, in order to obtain groupings (clusters) of behaviour towards H- and E-fields.

The grain size of the raw mineral is also a variable. Material of an impalpable fine size (<0.063 mm), but depending on the texture of the grain good results can be obtained with a grain size of several millimetres (<12 mm) and in agglomerate material.

In the present invention, "agglomerate material" is understood to be particulate material has been treated by means of granulation processes (e.g.: pellets, atomised).

The products obtained from the various treatment processes applied are differentiable concentrates of the antiferromagnetic (e.g.: ilmenite), ferromagnetic (e.g.: magnetite, maghemite, pyrrhotite), ferromagnetic (e.g.: Fe, Co, Ni, ferromagnetic hematite), paramagnetic (e.g.: wolframite, pyrite, siderite, Al, Pd, paramagnetic hematite), high conductivity diamagnetic (e.g.: Ag, Au, metals of the platinum group), low electrical conductivity diamagnetic (e.g.: Pb) and non-conducting diamagnetic (e.g.: quartz, calcite, and most of the constituent components of the gangue) family.

The most preferable method of the invention comprises the continuous flow of polymetallic or polymineral monometallic particulate ore in the single mode microwave applicator with possible additions of reducing agents and reactive salts. The particulate ore flows through a rotary tube fitted along its longitudinal axis to a single mode microwave chamber, preferably having a rectangular or circular cross-section that works at frequencies of 2.45 GHz, 915 MHz or 433.92 MHz. This ore is exposed to a controlled atmosphere, and elemental sulfur is generated from sulfur gases by means of the sulfur capture unit. The microwave power applied to the mineral, in addition to the temperature reached and the treatment time, is controlled in real time using impedance, power and temperature sensors, which provide the necessary information for activating actuators for tuning and controlling the flow of the mineral with adjustments in feed and rotation speed, inclination and vibration of the tube. The single mode microwave applicator contains the chamber with a precise internal geometry that determines the mode of the field and its distribution. The chamber contains a built-in Tuning Unit which adapts the geometry of said chamber to tune the operating frequency in real time. Thus, the frequency and mode obtained inside the chamber remain constant within the selected parameters during the treatment with respect to possible variations that may occur due to changes in flow rate, composition, temperature or the transformations produced in the mineral. This makes it possible to control and apply the field maximums in the section of the transport unit of the applicator through which the raw mineral flows, which in some cases will be the H-field, in others the E-field and in others the EH-field. The section of the transport tube of the applicator is a dielectric refractory material with low microwave susceptance. The raw mineral treated in the applicator is exposed to a static magnetic field that is maintained for a section of the cooling zone by means of coupled magnets (or electromagnets). Rapid cooling under the static magnetic field favours the maintenance of the magnetism in the treated mineral. The filters located at the inlet and outlet of the applicator confine the microwave energy in the chamber and prevent leaks. The design of the transformations in the mineral is achieved by combining the field type with reaction inducers, which are controlled atmosphere (oxidizing, anoxic, reducing), reducing compounds (graphite, humates, carbon black, carbonates) and additions of reactive salts (alkaline salts, alkaline earth and ammonium). The magnetic fractions obtained are separated by a magnetic separator at low temperatures (<80°C) or high temperatures, depending on their magnetic susceptibility properties, and dense fractions are separated by means of a density separator. Each of the treatments characterised by the nature of the mineral, the single mode microwave field applied, the controlled atmosphere, the reducing additions, the additions of reactive salts and the maintenance of the static magnetic field, define a stage that is previous to the separation of fractions. The achievement of various treatment stages configures the process that enables the extraction of metals from complex ores, wherefrom recoverable byproducts are removed in intermediate stages of the method (e.g. concentrated ore) or in more advanced stages (e.g.: new transformations with high metallic concentration) or final stages with a higher degree of purity (e.g.: purified metal). An example of this would be that a stage of wolframite concentrate is obtained as a recoverable byproduct from a polymetallic containing wolframite and, in a subsequent enrichment stage, W0₃ is obtained and, in a subsequent purification stage, W would be obtained.

In conclusion, the present invention is a metallurgical method and device for extracting metals which is carried out in consecutive stages with treatment in one of the modes of one of the components of the electromagnetic microwave field (H-field, E-field, alternating EH-field) applied with high power density of the selected field to the raw mineral and possible additions, and which allows feeding and treatment of the raw mineral in continuous flow, and in some cases is supplemented with a density separator. Each of these fields act on the components differently, the H-field being more selective than the E-field, and cause physical and chemical transformation effects on the minerals in themselves or by means of additives to promote the exact reactions sought.

The selection of the most appropriate field is performed according to the properties of magnetic permeability and complex dielectric permittivity of the raw mineral, of its constituent components, of the possible additions and of the reaction products. With these parameters, groupings (or clusters) of the components are obtained that make it possible to identify the type of field to be applied in the treatment for each stage (H-field, E-field EH-field) and define the stages for a comprehensive treatment and, ultimately, the design of the method. The H-field is more selective with induction of more controllable reactions and generates magnetisation at lower temperatures that is supplemented with E-field process stages.

Based on its configuration, the process is industrial, both due to the scale and to the robustness of the treatment itself. It is continuous, through the use of the open-ended single mode applicator, it is flexible, due to its ability to adapt to the type of raw mineral, it is also modular, because it can be carried out using portable devices and it is also a dry treatment. Another major advantage is that it offers adaptive control of the process, which is possible thanks to the control system in single mode applicators, making it very energy-efficient.

The method of the present invention can be compatible with existing processes and offers advantages as pre-treatments to hydrometallurgical treatment, in addition to taking advantage of the waste it can generate.

Therefore, the present invention makes it possible to design each method in accordance with the problem to be solved and solves complex problems which do not currently have an effective solution. It contributes significantly to industrial progress, with the availability of processes capable of solving problems in the treatment of metal extraction in complex ores, such as polymetallic, or low-grade not currently profitable, or in mineral phases not adequate for other methods, such as sulfides and the ability to carry out treatments in raw minerals very rich in metals with microwaves, which currently had severe limitations. It also offers solutions to the combination of various of these problems, which is enhanced by the ability to be a very selective process. Due to the capacity of the different consecutive processes, they can be made from a concentration of mine ores or even applied to refining and purification stages.

### Brief description of the figures

**FIGURE 1****:** Shows graphs corresponding to complex dielectric permittivity measure tests (dielectric constant and loss factor) during microwave heating.
**FIGURE 1a**. Shows pyrite-rich polymetallic sulphides treated in an oxidising atmosphere (air) expressing very high values of the dielectric constant and loss factor between 450ºC and 750°C.

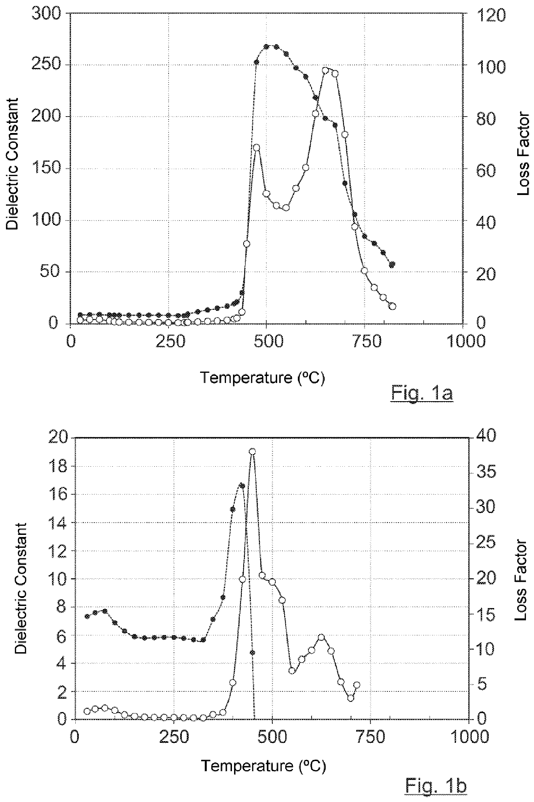

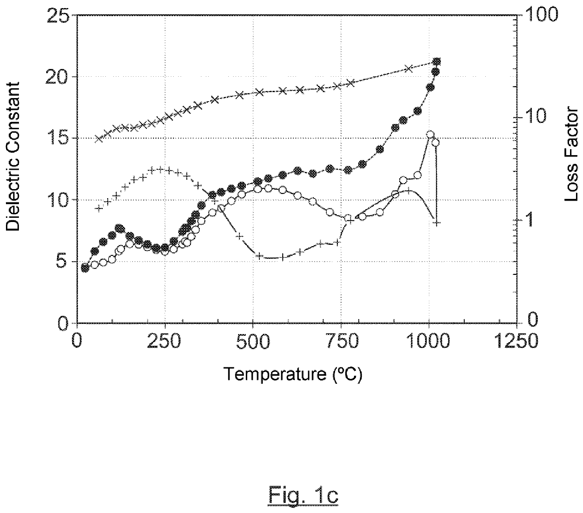

**FIGURE 1b**. Shows pyrite-rich polymetallic sulphides treated in an inert atmosphere (N2) showing a very rapid increase in the value of the dielectric constant from 370°C, with a maximum of 16.5ºC to 430°C and a very sudden drop from 440°C to 0ºC, recording negative values in the sensor. The loss factor shows lower values from 2.5ºC to 400°C; as of this temperature there i s a sharp increase in the loss factor up to 450°C by recording a value of 38, from which it drops to approximate values of 5 in the vicinity of 650-750°C. Negative data recorded as of 450°C of the dielectric constant are associated with a response from a material with metallic behavior.
**FIGURE 1c**. Shows hematite-rich non-magnetic iron oxides in an inert atmosphere (N2) exhibiting a significant change during heating that is not recovered during cooling. This indicates physical changes (magnetic behavior) which however have not been associated with a mineralogical change. This evidences the change from paramagnetic hematite to ferromagnetic hematite.
   Legend description: Dotted curve with a solid point, dielectric constant (ε'); continuous curve with a hollow point, loss factor (ε"); curve with x symbol, dielectric constant during cooling after the microwave treatment; curve with + symbol, loss factor during cooling.
**FIGURE 2****:** Shows a general device of a stage.
**FIGURE 3****:** Shows a device composed of a sequence in line with three treatment stages.
**FIGURE 4A****:** Shows an embodiment of the device with nitrogen injection in a raw mineral containing ores with sulphides.
**FIGURE 4B****:** Shows a detailed view of the sulfur recovery unit of a part of figure 4A.

### Detailed description of the invention

Preferably and in a non-limiting manner, a system for carrying out the proposed treatment may comprise the following components:
1) Feed unit
2) Transport unit
3) Microwave power generation and distribution unit
4) Single mode microwave applicator
5) Tuning unit
6) Filters
7) Magnet (or electromagnet)
8) Gas-adding unit
9) Sulfur capture unit
10) Cooling unit
11) Control unit
12) Treated ore separator

They are explained in greater detail below.
1) The feeding unit is composed of a hopper with adjustable output for controlling the volume of raw mineral that passes to the transport unit by vibration, or by screw, according to the work flow and the granulometry of the mineral. Vibration has been preferred in the device that operates at 2.45 GHz, due to having a flow rate of more than 2 kg/h and screw in the device that operates at 915 MHz, due to having flow rates greater than 15 kg/h.
2) The transport unit allows the flow of raw mineral from the feeding unit, through the applicator and the static magnetic field, to the outlet of the treatment zone. It consists of rotary actuators, an inclination varying mechanism and mechanical vibrator, in addition to other ancillary systems that facilitate continuous flow and minimise the buildup and adherence of the raw mineral to the walls of the transport element. Said unit is actuated by means of the control unit.
   The rotary movement of the tube is executed by means of a coupled rotation motor and is supported on bearings. This movement ensures homogenisation in a cross-section of the raw mineral during the treatment in the applicator. Speeds of between 1 and 50 rpm were sufficient for the treated situations.
3) The microwave power generation and distribution unit emits microwaves in a certain frequency band sufficient power and feeds the applicator via a waveguide. It is composed of a power supply, magnetron head, protection elements and waveguide. The most common operating powers, according to the most common features of current 2.45 GHz microwave generators are greater than 0.5 kW and up to 12 kW and, in the case of 915 MHz, are greater than 10 kW and up to 200 kW. In the 2.45 GHz microwave unit, the WR340-type waveguide is used with a standard cross-section of 86.36 x 43.18 mm. In the 915 MHz frequency, the WR975 waveguide with a standard cross-section of 247.65 x 123.82 mm is used.
4) The single mode microwave applicator is the place where the microwave energy is applied to the mineral for treatment thereof. It is composed of two elements: the single mode microwave chamber and the section of the applicator transport unit that transfers the raw mineral while subjected to the microwave energy. It has openings (input and output) large enough to work in open-ended mode and allow the continuous flow of ore.
   4.1) The single mode microwave chamber is built of metal with sufficient electrical conductivity, durability and heat resistance (e.g.: steel), has a specific design with precise geometry (preferably rectangular or circular). It houses the elements of the tuning unit, which are: adjustable sliding short circuit that regulates chamber geometry and the adjustable iris.
      The chamber is protected by porous ceramic thermal insulators with very low susceptance and is coupled to an external cooling unit.
   4.2) The section of the transport unit of the applicator contained in the microwave chamber which is actuated and which allows rotation and vibration. It consists of a dielectric refractory material with low microwave susceptance. In another configuration, a portion of the chamber is mobile and allows movement solidly connected to the transport tube.
5) Tuning unit that tunes and adapts the frequency of the electromagnetic mode in said chamber such as to maintain it at the emission frequency of the microwave generator and within a defined range. Said unit is controlled by the control unit. The main tuning and adapting elements are: the adjustable sliding short circuit, which regulates chamber geometry, the adjustable iris and the impedance coupler for adapting the signal to the raw mineral and maximising the energy absorbed.
6) The filters are components which are located adjacent to the applicator inlet and outlet. They exercise a barrier effect to microwave transmission and prevent microwave energy from dissipating outside of the applicator, thereby allowing its open-ended configuration. They are made of an electrically conductive material (e.g.: steel, aluminum) and have a specific geometry for each operating frequency.
7) Magnet (or electromagnet) for maintaining the magnetisation resulting from the action of the microwaves on the raw mineral treated during cooling thereof. It is located adjacent to the transport tube in the cooling zone and behind the applicator, but depending on the desired effect it is also applied to the terminal part of the applicator. In the case of electromagnets, their action is controlled by means of the control unit.
8) The gas-adding unit makes it possible to incorporate gases in the applicator to work with controlled atmospheres. It consists of gas (cylinder), an injector and pressure and flow valves. The injection is made in the applicator through the transport tube from one its ends, with dominion of the gas flow control in the flow direction of the raw mineral. Mobile windows limit the air openings at the ends of the transport tube to ensure a saturated and controlled environment in the applicator zone. Operating pressures are close to atmospheric pressures.
9) The sulfur capture unit makes it possible to obtain sulfur as a product recovered and recoverable from the transformations produced by the microwave treatment in minerals containing S at source in the form of sulfides. It consists of an extractor which is coupled to one of the ends of the applicator that displaces the cold gas (it is at a temperature below 120°C) to a heat exchanger, where it is cooled to precipitate it as solid sulfur approximately at melting temperature and falls into a tank that reheats it to a temperature of 120-150°C, from where it is poured into the final tanks as elemental S. Gas removal elements with S0₂ capture filters are in charge of preventing the risk of emanations of this gas into the atmosphere. The sulfur capture unit is commanded by the control unit.
10) Cooling unit. A forced air cooling element that is in charge of cooling the raw mineral to below the magnetic property exchange temperature and maintaining the resulting magnetisation within the action of the magnets is coupled towards the outlet end of the applicator. It does not act when hot magnetic separation is required.
11) Separator. The device is supplemented with a magnetic separator and with a density separator.
   The magnetic separator performs the magnetic separation operations of the raw mineral components in accordance with their magnetic susceptibility properties. Depending on the magnetic susceptibility relationships, a permanent magnet separator, induced rotor separator, drum separator or even Foucault separator or staggered separation is used. Hot separation is preferred in minerals with very little sensitivity to a static magnetic field.
12) The control unit is in charge of commanding the process of each of the units and of their integration in the process. It consists of sensors that receive the process information and, by means of control logic, through the programmable logic controller, drive the corresponding actuators.

Sensors are disposed throughout the system in order to complete the process: temperature sensors at various points of the process, rotation speed sensors, inclination sensors, mass sensors, magnetic field sensors, pressure sensors, gas flow sensors, cooling water flow rate sensors, electrical power sensors, environmental microwave radiation sensors, magnetic field sensors and other ancillary sensors.

Each polymetallic or single mineral polymetallic ore family requires programming conditioned by the treatment sequences so that the designed physical and chemical reactions take place.

The sensors and actuators that constitute the control unit are as follows:
- Feed unit controller. It has mass sensors and hopper output activation actuator sensors, vibration speed sensors (or flow rate in case of screw).
- Transport unit controller. It has temperature sensors and rotation speed, vibration and inclination actuator sensors.
- Microwave power generation and distribution unit controller. It has temperature sensors to protect the generator and actuators for varying the microwave power supplied.
- Applicator controller. The process in the applicator requires specific and inherent sensors for measuring average impedance and power, which are very sensitive to changes in the mineral, which are combined with temperature sensors (pyrometer type), and which by means of the tuning unit allows real-time adapted control. It is composed of the following instrumentation elements:
   ∘ Impedance sensor.
   ∘ Sensor for microwave power emitted and reflected in real time.
   ∘ Contact probe- and pyrometer-type temperature sensors.
   ∘ Real-time actuators of the mechanical components of the tuning unit that keep the microwave frequency tuned and adapted.
   ∘ Microwave power actuators.
- Gas injection controller. It has flow rate sensors, gas pressure sensors, temperature sensors and gas opening and shutting actuator sensors.
- Sulfur capture controller. It has pressure sensors at various points of the circuit, ambient temperature and liquid sulfur, gas and liquid flow rate, and actuators for the cooling circuit and for the thermal elements.
- Cooling unit controller. It has a temperature and air flow rate sensor.
- Static magnetic field electromagnet (or magnet) controller. If the electromagnet is actuated by the passage of current.
- Magnetic separator controller.
- Density separator controller.
- Safety controller. It integrates all elements of the environmental safety alarm, operation and occupational safety included in the process and act to correct or paralyse the process in the event that safety risks are identified. It has sensors adjacent to the ends of the filters (applicator openings) with microwave radiation leakage, gas emission (SOₓ, NOₓ), residual magnetic field and electrical safety alarms.

The device is designed to be flexible and modular and allows the easy line assembly thereof according to the complexity of the stages. It also allows an arrangement of a set of applicators to achieve orders of one hundred kilogrammes per hour.

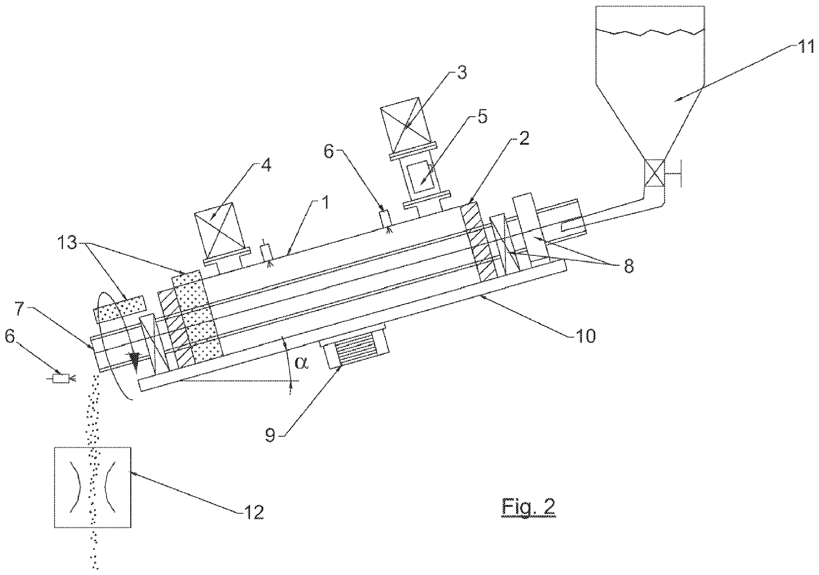

Below and making reference to Figures 2-4, various embodiments are described in a non-limiting manner.

The device for the continuous flow processing of raw mineral containing metallic ores consists of the integration of three essential parts: components related to the microwave applicator, components of the transport unit and ancillary systems, and components of the sulfur capture unit.

Figure 2 shows an embodiment of the device that treats metallic ores with microwaves and consists of an open-ended single mode microwave applicator (in any of the fields of the scope of the present invention) which is formed by a microwave chamber (1) with a rectangular or circular cross-section manufactured from metal with sufficient conductivity, durability and heat resistance (e.g.: steel), plus the section of the transport tube (7) that penetrates the chamber itself. A microwave generator whose wave one is transmitted through a waveguide (3) is coupled to the applicator. The mode frequency in the interior of the chamber (1) is tuned by a tuning unit (4).Two filters (2) coupled at each end of the microwave chamber (1) prevent microwave leakage and enable the movement of a rotary tube (7) which acts as a container and transport element of the raw mineral. The control unit includes sensors of impedance and power emitted and reflected (5) in real time that are coupled to the waveguide.

The process is additionally controlled by temperature sensors (6), pyrometers that measure the temperature at key points inside and outside the tube, and thermocouples that control external temperatures.

The tube (7) is dielectric and is arranged along the applicator. Therefore, it allows the raw mineral contained therein to move during the treatment, which it does by rotating around its longitudinal axis when it is tilted. A set of bearings fix the tube and allow its rotation actuated by variable-speed rotation motors (8) integrated in a frame (10) which is isolated from the structure by means of silent blocks. A vibration motor (9) generates vibration to the transport system used mainly to prevent caking within the raw mineral itself and adherence to the tube. The aforementioned vibration isolation system based on silent blocks prevents the vibration generated on the rotary tube from also being transmitted over the sensitive parts of the system such as motors, sensors and microwave generator.

The tube (7), the rotation and vibration mechanism, and the components of the microwave applicator are coupled to the frame (10), which allows the precise inclination according a variable angle (α). The flow speed of the raw mineral is controlled by the speed of rotation of the tube, inclination and vibration. In turn, the necessary forward movement speed of the raw mineral is determined mainly by impedance sensors, emitted and reflected power sensors, and temperature and raw mineral flow (mass) sensors.

The feeder (11) controls the inflow of raw mineral.

The mineral is separated according to its magnetic properties by means of a separator (12) at the outlet of the microwave applicator. These properties can be enhanced by heating with an additional static magnetic field (magnet or electromagnet) coupled to the outer part of the tube and applicator, and is placed at the end and/or outside the applicator (13).

For the sake of simplicity of the figure, the cooling unit of the sample and the cooling unit of the applicator have not been highlighted.

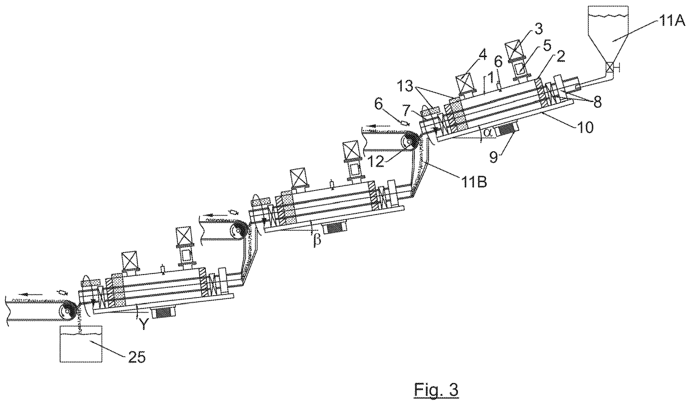

Figure 3 shows a line assembly of modular devices that constitute a cluster of applicators. After a treatment stage, the raw mineral is collected at a subsequent hopper (11B) which can incorporate thermal insulation, which is not usually required in the first hopper (11A), which introduces it in the following serial applicator module. This second applicator module will have different electric and magnetic field configuration and which treats the sample in a significantly different manner to the foregoing. This stage is repeated one or more times with different field configurations and at different method temperatures until completing the transformation and separation phases. Each module is independent from the rest with its own rotation speed and inclination (β, γ) according to their rheological behaviour. The magnetic separation system (12) may be supplemented with an additional separator by density, by electrical properties, by optical properties, or other type of separator that can be coupled thereto.

The gases produced during the treatment of the mineral ore are collected for the recovery thereof.

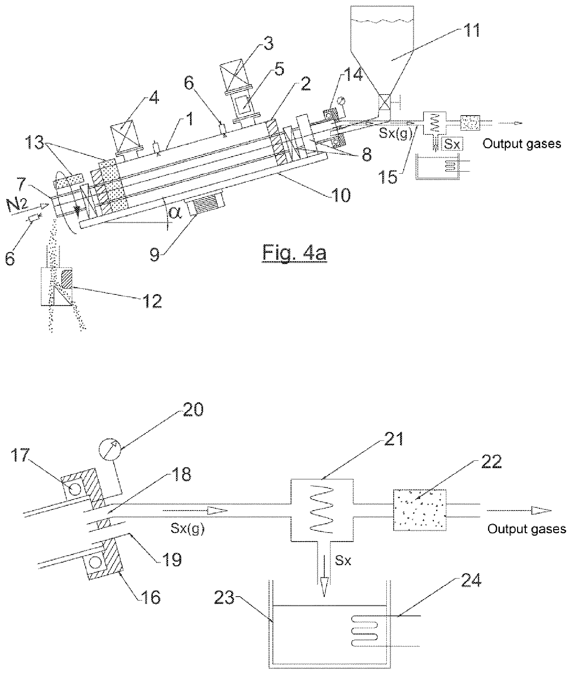

Figure 4A shows an embodiment in a controlled anoxic atmosphere that prevents the formation of sulfur oxides as a gaseous product. In this process the gas, usually N₂, is applied through one of the openings of the tube in the form of injection that produces a positive pressure and acts by displacing air. The gas is collected by suction by means a sulfur gas capture system (14) that transports the gas to the precipitation system (15). These two systems belong to the sulfur capture unit.

Figure 4B shows a detailed view of part of the embodiment with anoxic atmosphere, in an example with gas flow in the opposite direction to the flow of raw mineral. The capture system (14) has a closing lid (16). The movement of the tube in the applicator is takes place by means of a system of bearings, bushings or similar (17). An outlet duct (18) that removes gas rich in gaseous sulfur and the gas inlet duct (19) and the pressure measurement system (20) is inserted in this lid. The removed gas is processed by means of the sulfur capture unit, which comprises a heat exchanger (21) wherein sulfur gases are cooled to give it its solid or liquid form and are collected in a tank (23). For better handling, it can be maintained in liquid phase during transport, which is regulated by means of a heating system (24) that maintains the temperature between 120ºC and 150°C. Exhaust gases are released into the air by means of a Soₓ capture or catalysis filter (22).

### Examples

With the intention of showing the present invention in an illustrative but non-show an illustrative but in no way limiting manner, the following examples are provided.

In order to design the process, a list of the constituent components and expected resulting components and intermediate phases of the polymetallic or polymineral ore is drawn up. With these components, complex dielectric permittivity and complex magnetic permeability relationships are established, thereby obtaining families with differentiable behaviour, making it possible to design the process for modifying the magnetic properties and producing mineralogical transformations that make it possible to obtain the recovered product.

The samples that constitute the raw mineral of each example are compositions common in nature and in mining waste.

The initial samples and the products obtained were studied by means of chemical analysis using X-ray fluorescence, inductively coupled plasma mass spectrometry (ICP-MS) and inductively coupled plasma optical emission spectometry (ICP-OES) and electron microprobe (MEP) techniques, and by means of mineralogical analysis using X-ray diffraction (XRD), scanning electron microscope (SEM) and petrographic microscopy techniques. The results of the analysis of the examples are expressed as a % by weight.

The treatments of the following examples were performed with single mode resonant applicators with open configuration, quartz glass tube with ceramic components nitride, tuned automatic software controlled. Feeding was performed with coupled vibration feeder hopper. In Example 1, feeding was performed with screw feeder supported by vibration.

### Example 1: Concentration by magnetisation in a dominant H-field applicator: Case of hematite to magnetic hematite without mineralogical change in iron ores.

A raw mineral containing particulate iron ore with a grain size <0.125 mm with total iron content of 56% was used. Of this amount of iron (Fe), 41% is in the form of hematite, and the remainder in the form of magnetite (FeO·Fe₂0₃), goethite (FeO(OH)) and siderite (FeCO₃). The remaining components form the gangue constituted by quartz and feldspars.

The raw mineral was continuously processed in a microwave device with H-field open-ended single mode applicator configuration. A frequency of 915 MHz was used in an H-field application 28 cm in length and 80 mm in diameter, working with a flow rate of 25 kg/h using a generator with an installed power of 75 kW to heat the sample, which reached a temperature of 690-810°C measured using a pyrometer, measuring from the open end of the tube outlet. Six 1.2 tesla magnets were placed on the terminal part and up to 60 cm outside of the applicator to ensure that the magnetisation resulting during cooling, which was carried out with air, was maintained. The treated raw mineral was passed through a magnetic separator (Frantz model), obtaining a concentrate containing more than 67% of iron in the form of ferromagnetic hematite traces of magnetite. The rest of the gangue, with a hematite content of less than 8% by weight, was discarded.

### Example 2: Concentration and enrichment of polymineral monometallic iron ore. Decomposition of iron carbonates and magnetisation of iron oxides and hydroxides in EH-field applicator.

A raw mineral formed by an iron ore in various mineral phases milled to a grain size smaller than 0.065 mm, containing iron ores in the form of oxides (hematite), hydroxides (goethite, lepidocrocite: FeO(OH)), hydrate-hydroxides (limonite) and carbonates (siderite: FCO₃). The analytical results obtained in the raw mineral based on geochemical and mineralogical analysis showed the following concentration: 53.4% hematite, 26.7% siderite, iron hydroxides and hydrate-hydroxides (calculated by weight difference) constitute 8.9%. The gangue is present in 11% by weight in the form of quartz.

An 80 cm continuous single mode microwave applicator configured at 2.45 GHz was used, with an E- and H-field simultaneously, and with one-quarter wavelength maximums between each of the electromagnetic fields. The tube had an inclination of 5º, with a vibration feeder for continuous treatment and rotated at a speed of 3 to 4 rpm. The treatment was performed at a flow rate of 3 kg/h using a generator with an installed microwave power of 3 kW until heating the sample to 840°C measured with a pyrometer. Four 1.2 tesla magnets were installed at the terminal end of the applicator, passing the resulting raw mineral, still warm, through a magnetic separator (Frantz model) at between 300ºC and 150ºC, giving the resulting product a Fe content greater than 68.5% in the form of hematite and with minority magnetite contents.

### Example 3: Two-stage enrichment and refining process by reduction in complex polymetallic tungsten ore and presence of other ores (iron, tin) in H-field and EH-field applicators.

A raw mineral formed by a complex polymetallic ore rich in tungsten and other iron and tin metals, milled to a grain size <0.065 mm, containing 40% by weight of wolframite ((Fe,Mn)W0₄), 20% cassiterite (SN0₂), 10% of iron oxides (hematite and goethite), and 30% of gangue components such as quartz, mica, feldspar and other oxides. Hematite was present as predominantly feeble magnetic hematite (paramagnetic), with a fraction with feeble ferromagnetism.
Stage 1. Concentration and enrichment in H-field applicator with magnetisation of hematite, dehydroxylation of goethite and separation of wolframite for concentration of wolframite and iron ores.

The raw mineral in its entirety was treated in two connected H-field applicators. The two applicators are connected online and in direct contact to obtain the equivalent of a 24 cm H-field treatment applicator, each with a useful length of 12 cm. It was heated to a temperature of 740-780°C measured with a thermal camera, setting a magnetic field at the end of the outlet applicator with four 1.2 tesla magnets. The sample was passed through a hot magnetic separator (Frantz model) at between 150-300°C to obtain a ferromagnetic hematite concentrate enriched with >67% of Fe. The remaining fraction is processed in a second drum magnetic induction cold magnetic separator magnetic induction drum and a concentrate with tungsten oxides at more than 92% was obtained after rejecting some remains of micas using the blowing density method. The rest of the gangue contains amounts of 5% of nonusable iron. Stage 2. Enrichment and refining of tungsten in an EH-field applicator and reduction of wolframite potassium humate and graphite to obtain oxides richer in wolframite.

In a second EH-field single mode applicator fed by a 3 kW and 80 cm long microwave generator, wolframite was introduced adding 12% by weight of potassium humate and graphite, less than 0.080 mm in size. The rotation speed was maintained at 4-5 rpm and an inclination of 5º to reach temperatures of up to 940°C. The results obtained from the treated samples were tungsten oxides in a smaller state in the form of WO₃ and W₄O₁₁ and traces of potassium humate and potassium salts.

The raw mineral was processed continuously at the outlet using a dry magnetic separator (Frantz model) to obtain two fractions:
- Reduced tungsten oxide fraction more than 92% enriched.
- Remaining fraction (gangue, cassiterite, unprocessed wolframite, traces of potassium compounds).

### Example 4: Recovery by aggressive reduction in polymetallic ores complex of tungsten, with concentration, enrichment, refining and partial purification

A raw mineral formed by a fraction milled to a grain size <0.065 mm was used containing 40% by weight of wolframite ((Fe,Mn)W0₄), 20% of cassiterite (SN0₂) 10% of iron oxides (hematite and goethite) and 30% of gangue components such as quartz, micas, feldspars and other oxides. Hematite was predominantly in the form of feebly magnetic hematite (paramagnetic), with a fraction with feeble ferromagnetism.

### Stage 1. Concentration and enrichment in H-field applicator.

An identical treatment was carried out on the mineral described in Stage 1 of Example 3.

### Stage 2. EH-field applicator and reduction of wolframite with graphite, with enrichment and partial purification.

Wolframite was introduced in a second EH-field applicator fed by a 3 kW 80 cm long generator adding 12% by weight of graphite less than 0.080 mm in size. Rotation speed was maintained at 4-5 rpm and inclination of 5º, reaching temperatures of up to 940°C. Four 1.2 tesla magnets were placed in the te rminal part of the applicator. The result obtained were very reduced phases, obtaining metal W, concentrated tungsten oxides, in the form of W0₃ and W₄O₁₁ and composite materials of tungsten carbide mainly in the form of Fe₃W₃C.

The resulting ore, partially caked after the treatment, was dry milled to grain sizes of <0.080 mm and passed through a dry magnetic separator (Frantz type) in three consecutive separation stages, allowing the separation of four fractions:
- 95% metal W,
- 92% tungsten oxides (W0₃ and W₄O₁₁),
- 98% tungsten carbide with iron (Fe₃W₃C),
- non-magnetic mineral gangue and remaining unseparated W phases.

The yields achieved allow adequate industrial balances.

### Example 5. Treatment of polymetallic sulfides. Removal of elemental sulfur in EH-field and E-field applicator and enrichment, refining and partial purification of metals.

A milled raw mineral milled to a grain size of <0.065 mm and consisting of sulfide ores containing 85% pyrite by weight and other Co, Zn and Pb metal sulfides in amounts of less than 15%. The mineral phases identified were pyrite (FeS₂) as dominant phase, with minority chalcopyrite (CuFeS₂) phases and traces of pyrrhotite (FeS) and siderite (FeCO₃).

### Stage 1. Concentration and enrichment of Fe, Cu, Co, Zn, Pb metals and removal of elemental sulfur in EH-field applicator.

The raw mineral was subjected to a single mode EH-field applicator in a frequency of 2.45 GHz. N₂ gas was added by means of direct injection at very low pressure, generating a light flow in the flow direction of the raw mineral. It was processed at a flow rate of 2 kg/h using a 3 kW microwave power generator that made it possible to reach a decomposition temperature o up 750°C measured with a thermal camera.

The gases released at a measured temperature of 118°C were suctioned maintaining pressure of approximately 10 mbar. The gas was precipitated in the form of solid sulfur by cooling in a heat exchanger below 85°C and was recovered as high purity liquid sulfur after heating again to 150°C.

The output mineral is formed by iron sulfides of the troilite-pyrrhotite series with a composition of FeₓS (x = 1 to 0.8) and other phases containing associated Cu, Ag, Zn and Pb, among which the presence of chalcopyrite is identified (approximately 5% by weight). Recovered sulfur was 54% by weight of the stoichiometric content of the original pyrite.

### Stage 2. Addition of Na and Ca salts in H-field applicator coupled to a second E-field applicator for enrichment, refining and partial purification of Fe and enrichment of other metals.

A preparation of chlorine salts and carbonates, containing 6% NaCl, 8% Ca₂Cl and 6% CaCO₃ and 4% Na₂CO₃ was added to the mineral obtained in Stage 1. Next, this compound was treated in a 12 cm long H-field applicator using a rotation speed of 4 rpm to which a second 12 cm long E-field applicator was connected, each of which having a 3 kW microwave generator. This guaranteed the prevention of violent reactions. It was treated up to 850°C, as measured with a pyrometer.

The mineral was cooled with forced air at a temperature below 200°C, maintaining a magnetic field of 1.2 tesla, located in the vicinity of the applicator outlet to maintain a magnetic field and then washed with water to remove the soluble salts.

The solid residue was passed through a magnetic separator (Frantz type), obtaining two fractions:
- Magnetic fraction: enriched fraction rich in magnetite (FeO-Fe₂0₃) and wustite (FeO), and fraction of elemental iron (Fe), which jointly represent 81% by weight, in addition to copper oxides and magnetic iron carbides (traces).
- Non-magnetic fraction (feeble paramagnetic, diamagnetic): very feeble magnetic fraction with Cu, Ag, Zn and Pb and other minority elements (rare earths), in addition to gypsum (CaS0₄·2H₂0). Iron carbide (FeₓC) components were also found, referred to as steels.

### Example 6. Treatment of complex polymetallic sulfides. Sulfur removal in H-field applicator for magnetisation, desulfurisation and extraction of metal components.

A raw mineral with a grain size of <0.065 mm rich in copper sulfides and iron and presence of Zn and Pb, in the form of chalcopyrite (CuFeS₂), pyrite (FeS₂), sphalerite (ZnS) and galena with presence of other minority metal components (Co, Ni, Cr) and traces (Ag) and nonmetallic components (quartzite) was used.

### Stage 1. Treatment in H-field applicator for magnetisation of sulfides, partial desulfurisation and concentration of Cu-Fe minerals.

The raw mineral was processed in an H-field with a 12 cm long treatment section, working at a solid flow rate of 4 kg/h with a 3 kW microwave generator, with low-pressure injection of industrial quality N₂ gas, reaching a temperature of approximately 340-430°C measured with a thermal cam era. At the outlet end, four 1.2 tesla permanent magnets disposed such as to maintain a static magnetic field. The scarce gases released were suctioned maintaining a difference in pressure between the processing tube and the suction tube of approximately 10 mbar. The gas was precipitated in the form of solid sulfur by cooling in a heat exchanger below 85°C and was recovered as high purity liquid sulfur after heating again to 150°C. The raw mineral extracted was treated with an in-line magnetic separator, obtaining a fraction of magnetic sulfides with incipient Cu-Fe desulfurisation and a non-magnetic fraction consisting of gangue and the other metal components.

### Stage 2. Treatment of minerals for enrichment of metals and production of sulfur in EH-field applicator for intense desulphurisation of the magnetic fraction.

The magnetic fraction of Stage 1 and other associated components thereof (Ni, Co, Cr) was treated in three stages with an EH-field applicator and sulfur removal using the same method of Stage 1, heating to 1,050°C, fin ally giving a fraction of feebly magnetic and Cu-Fe enriched minerals.

### Stage 3. Addition of Na and Ca salts to the non-magnetic fraction in H-field applicator coupled to a second E-field applicator for Fe enrichment.

A preparation of chlorine salts and carbonates containing 6% NaCl, 8% Ca₂Cl and 6% CaCO₃ and 4% Na₂CO₃ was added to the raw mineral fraction obtained in Stage 2.

Next, the composite mixture was treated in a 12 cm long H-field applicator using a rotation speed of 4 rpm, to which a second 12 cm long E-field applicator was connected, each of which having a 3 kW microwave generator. This guaranteed the prevention of violent reactions. It was treated up to 850°C, according to the measurement made with a pyrometer.

The ore was cooled with forced air at a temperature below 200C, with four 1.2 tesla magnets located in the vicinity of the applicator outlet to maintain a magnetic field. Next, it was washed with water to remove the soluble salts.

The resulting solid fraction was passed through a magnetic separator (Frantz type) yielding 2 fractions:
- Magnetic Fraction: fraction rich in magnetite (FeO-Fe₂0₃) and wustite (FeO), elemental iron (Fe), which represent 79% by weight.
- Non-magnetic fraction (feeble paramagnetic, diamagnetic): very feeble magnetic fraction with Ag plus components generated as a reaction byproduct sulfides with salts (CaS0₄-2H₂0) and traces of unreacted insoluble salts (CaCO₃). Iron carbide (FeₓC) components were also found. The separation of the metallic fraction from the gangue (including reaction byproducts) was performed using a wet density separator.

### Stage 4. Treatment of the non-magnetic fraction of Stage 1 in E-field applicator for complete desulfurisation and enrichment and refining of Fe, Zn, Pb.

Potassium, sodium and calcium salts (10% CaCO₃, 6% KCI, 6% NaCI) were added to the non-magnetic fraction of Stage 1. Next, it was processed in a 12 cm long E-field applicator, reaching temperatures of 890°C. Sulfur removal was performed using the same method of Stage 1. Iron oxide, zinc oxide, lead oxide and metallic Zn and Pb, and reaction and gangue salt byproducts were obtained. The entire resulting mineral was passed through a wet density separator to separate the non-metal components (reaction and gangue insoluble salt byproducts) from the metal components.

### Example 7. Extraction of vanadium from alkaline salts in H-field and EH-field applicator.

The initial raw mineral is formed by a fraction milled to a grain size of <0.065 mm containing 65% of iron oxides in the form of hematite (Fe₂0₃) and magnetite (FeO-Fe₂0₃), plus <10% of siderite (FeCO₃) and contains quartz, feldspars and micas and a vanadium content of 0.8%.

### Stage 1. Fe enrichment in H-field applicator with addition of graphite and humates.

Additions included graphite (5%) and potassium humates (12%), and the whole was treated in an H-field applicator with a flow rate of 1.1 kg/h using a 3 kW generator to reach 790°C. The ends were partially closed to generate a high concentration of release gases to facilitate reduction.

Once the sample had cooled to approximately 60°C, i t was passed through a magnetic separator, obtaining a magnetite concentrate of 98% of the total with a minority content of wustite.

### Stage 2. Enrichment and refining of V in EH-field applicator with addition of salts.

6% of NaCI and 8% of NaCO₃ was added to the magnetite-rich raw mineral of Stage 1 and this mixture was finely milled, whereupon the compound to be processed had a grain size of <0.045 mm.

This compound was treated in an H-field applicator to which another EH-field applicator was connected. Temperatures of 850°C were measured in the raw mineral with the treatment in the H-field applicator and 1,150°C in the EH-field applicator.

The output mineral was poured directly into water and stirred for 10 min.

The insoluble residue, after drying, gave a vanadium oxide concentrate of 9.2 g per kg of hematite.

## Claims

1. A selective method of extracting metals from a raw mineral, comprising:
- a step of electromagnetic heating of said raw mineral with microwaves in the dominant magnetic field, or H field, followed by an additional step of dielectric heating with microwaves in the dominant electric field, or E field, and a step of dielectric and magnetic heating simultaneously with microwaves in alternating electric and magnetic field, or E-H field;
- a step of electromagnetic heating of said raw mineral with microwaves in the H field, followed by a step of dielectric and magnetic heating simultaneously with microwaves in the E-H field;
or
- a step of electromagnetic heating of said raw mineral with microwaves in the H field, followed by an additional step of dielectric and magnetic heating simultaneously with microwaves in the E-H field and a step of heating with microwaves in the E field;
wherein all electromagnetic fields are applied in an open single-mode applicator, and
separation of the obtained products after each step of heating by magnetic separation of selectively magnetized components,
in a dry process of an open rotary system at continuous flow.

2. The method according to claim 1, **characterized in that** said raw mineral contains a polymetallic or polymineral monometallic ore.

3. The method according to claim 1, **characterized in that** said raw mineral are industrial wastes.

4. The method according to any one of claims 1 to 3, comprising the addition of carbon as a reducing component to said raw mineral, prior to any step of treatment with microwaves.

5. The method according to claim 4, **characterized in that** said carbon is graphite, humates, carbon black or carbonates.

6. The method according to any one of claims 1 to 5, comprising the application of an external static magnetic field in at least one step of treatment with microwaves.

7. The method according to any one of claims 1 to 6, which is carried out in the presence of controlled atmosphere.

8. The method according to claim 7, **characterized in that** said controlled atmosphere is an anoxic atmosphere in the presence of N₂ or CO₂.

9. The method according to claim 8, comprising a step of extracting elemental sulfur by condensation or solidification of the gases extracted from said anoxic atmosphere.

10. The method according to any one of claims 1 to 9, **characterized in that** said single-mode applicator comprises radiation filters in at least one end.

11. A device for the selective extraction of metals from a raw mineral, comprising:
- a microwave chamber (1) configured for confining a single-mode electromagnetic field having a frequency in the microwave range, one of its components, E electric or magnetic H, being dominant or both components being alternating E-H, according to the complex dielectric permittivity and magnetic permeability properties of the raw mineral,
- transport means for transporting by stirring the particles of the raw mineral through the chamber (1) comprising a transport tube (7) and rotation motors (8) capable of stirring the particles,
- transmission means configured for transmitting an electromagnetic field having a frequency in the microwave range inside the chamber (1),
- separation means at the exit of the microwave chamber (1) comprising a magnetic separator (12),
- a tuning unit (4) configured for tuning the mode of the electromagnetic field by means of modifying the geometry of the microwave chamber (1).

12. The device according to claim 11, **characterized in that** the separation means are based on density.

13. The device according to claim 11, **characterized in that** the transport means are inclinable.

14. The device according to claim 11 or 13, **characterized in that** the transport means comprise a vibration motor (9) for stirring the particles in their movement.

15. The device according to any one of claims 11 to 14, comprising coupled filters (2) to prevent radiation from leaking out when the microwave chamber (1) is open.

16. The device according to any one of claims 11 to 15, **characterized in that** the tuning unit (4) comprises a sliding short-circuit to regulate the geometry of the microwave chamber (1).

17. The device according to any one of claims 11 to 16, **characterized in that** the microwave chamber (1) has a geometry confining at least one maximum of the magnetic component H of the field in the transport tube (7).

18. The device according to any one of claims 11 to 17, **characterized in that** the microwave chamber (1) has a geometry confining at least one maximum of the electric component E of the field in the transport tube (7).

19. The device according to any one of claims 11 to 18, **characterized in that** the microwave chamber (1) has a geometry confining the alternating maximums of the components of electromagnetic E-H field in the transport tube (7).

20. The device according to any one of claims 11 to 19, **characterized in that** the transmission means comprise a waveguide (3).

21. The device according to any one of claims 11 to 20, comprising a microwave generator coupled with the transmission means.

22. The device according to claim 21, comprising a control unit configured for controlling the transport means, the transmission means and the tuning unit.

23. The device according to claim 22, **characterized in that** the control unit is configured for equalizing the mode frequency in the microwave chamber (1) to the frequency of the microwave generator.

24. The device according to claim 23, comprising at least one impedance sensor (5), temperature sensor or power sensor.

25. The device according to any one of claims 11 to 24, comprising gas addition means for incorporating gases inside the transport tube (7).

26. The device according to any one of claims 11 to 25, comprising sulfur capture means for recovering sulfur from the processing by means of an extractor coupled to one of the ends of the transport tube (7).

27. The device according to any one of claims 11 to 26, comprising a magnet or electromagnet (13) at the exit of the chamber or in the final segment theref, to maintain the magnetization resulting from the raw mineral treated during cooling thereof.

28. A system for the selective extraction of metals from a raw mineral, comprising a plurality of devices according to any one of claims 11 to 27, arranged in series to sequentially treat in each device at least one component of the raw mineral.

## Patentansprüche

1. Selektives Verfahren zur Gewinnung von Metallen aus einem Rohmineral, umfassend:
- einen Schritt des elektromagnetischen Erhitzens des Rohminerals mit Mikrowellen im dominanten Magnetfeld oder H-Feld, gefolgt von einem zusätzlichen Schritt des dielektrischen Erhitzens mit Mikrowellen im dominanten elektrischen Feld oder E-Feld und einem Schritt des dielektrischen und magnetischen Erhitzens gleichzeitig mit Mikrowellen im elektrischen und magnetischen Wechselfeld oder E-H-Feld;
- einen Schritt des elektromagnetischen Erhitzens des Rohminerals mit Mikrowellen im H-Feld, gefolgt von einem Schritt des dielektrischen und magnetischen Erhitzens gleichzeitig mit Mikrowellen im E-H-Feld;
Oder
- einen Schritt des elektromagnetischen Erhitzens des Rohminerals mit Mikrowellen im H-Feld, gefolgt von einem zusätzlichen Schritt des dielektrischen und magnetischen Erhitzens gleichzeitig mit Mikrowellen im E-H-Feld und einem Schritt des Erhitzens mit Mikrowellen im E-Feld;
wobei alle elektromagnetischen Felder in einem offenen Einmoden-Applikator angelegt werden, und
Die Abtrennung der erhaltenen Produkte nach jedem Erhitzungsschritt durch magnetische Abtrennung von selektiv magnetisierten Bestandteilen erfolgt in einem Trockenverfahren eines offenen Rotationssystems bei kontinuierlichem Durchfluß.

2. Verfahren nach Anspruch 1, **dadurch gekennzeichnet, dass** das Rohmineral ein polymetallisches oder polymineralisches monometallisches Erz enthält.

3. Verfahren nach Anspruch 1, **dadurch gekennzeichnet, dass** das Rohmineral Industrieabfälle sind.

4. Verfahren nach einem der Ansprüche 1 bis 3, umfassend die Zugabe von Kohlenstoff als reduzierende Komponente zu dem Rohmineral vor jedem Schritt der Behandlung mit Mikrowellen.

5. Verfahren nach Anspruch 4, **dadurch gekennzeichnet, dass** der Kohlenstoff Graphit, Humate, Ruß oder Carbonate ist.

6. Verfahren nach einem der Ansprüche 1 bis 5, umfassend das Anlegen eines externen statischen Magnetfeldes in mindestens einem Schritt der Behandlung mit Mikrowellen.

7. Verfahren nach einem der Ansprüche 1 bis 6, das in Gegenwart von kontrollierter Atmosphäre durchgeführt wird.

8. Verfahren nach Anspruch 7, **dadurch gekennzeichnet, dass** die kontrollierte Atmosphäre eine anoxische Atmosphäre in Gegenwart von N₂ oder CO₂ ist.

9. Verfahren nach Anspruch 8, umfassend einen Schritt der Gewinnung von elementarem Schwefel durch Kondensation oder Verfestigung der aus der anoxischen Atmosphäre geförderten Gase.

10. Verfahren nach einem der Ansprüche 1 bis 9, **dadurch gekennzeichnet, dass** der Einmoden-Applikator an mindestens einem Ende Strahlungsfilter aufweist.

11. Vorrichtung zur selektiven Gewinnung von Metallen aus einem Rohmineral, umfassend:
- eine Mikrowellenkammer (1), die zum Einschließen eines elektromagnetischen Einmodenfelds mit einer Frequenz im Mikrowellenbereich eingerichtet ist, wobei eine ihrer Komponenten E elektrisch oder magnetisch H dominant ist oder beide Komponenten E-H alternieren, entsprechend der komplexen dielektrischen Dielektrizitätskonstante und magnetische Permeabilitätseigenschaften des Rohminerals,
- Transportmittel zum Transportieren durch Rühren der Partikel des Rohminerals durch die Kammer (1), umfassend ein Transportrohr (7) und Rotationsmotoren (8), die in der Lage sind, die Partikel zu rühren,
- Übertragungsmittel, die zum Übertragen eines elektromagnetischen Feldes mit einer Frequenz im Mikrowellenbereich innerhalb der Kammer (1) eingerichtet sind,
- Trennmittel am Ausgang der Mikrowellenkammer (1) mit einem Magnetabscheider (12),
- eine Abstimmeinheit (4), die zum Abstimmen des Modus des elektromagnetischen Feldes durch Ändern der Geometrie der Mikrowellenkammer (1) eingerichtet ist.

12. Vorrichtung nach Anspruch 11, **dadurch gekennzeichnet, dass** die Trennmittel auf Dichte basieren.

13. Vorrichtung nach Anspruch 11, **dadurch gekennzeichnet, dass** die Transportmittel neigbar sind.

14. Vorrichtung nach Anspruch 11 oder 13, **dadurch gekennzeichnet, dass** die Transportmittel einen Vibrationsmotor (9) zum Rühren der Partikel bei ihrer Bewegung umfassen.

15. Vorrichtung nach einem der Ansprüche 11 bis 14, mit gekoppelten Filtern (2), um ein Austreten von Strahlung bei geöffneter Mikrowellenkammer (1) zu verhindern.

16. Vorrichtung nach einem der Ansprüche 11 bis 15, **dadurch gekennzeichnet, dass** die Abstimmeinheit (4) einen gleitenden Kurzschluss zur Regelung der Geometrie der Mikrowellenkammer (1) aufweist.

17. Vorrichtung nach einem der Ansprüche 11 bis 16, **dadurch gekennzeichnet, dass** die Mikrowellenkammer (1) eine Geometrie aufweist, die mindestens ein Maximum der magnetischen Komponente H des Feldes im Transportrohr (7) begrenzt.

18. Vorrichtung nach einem der Ansprüche 11 bis 17, **dadurch gekennzeichnet, dass** die Mikrowellenkammer (1) eine Geometrie aufweist, die mindestens ein Maximum der elektrischen Komponente E des Feldes im Transportrohr (7) begrenzt.

19. Vorrichtung nach einem der Ansprüche 11 bis 18, **dadurch gekennzeichnet, dass** die Mikrowellenkammer (1) eine Geometrie aufweist, die die wechselnden Maxima der Komponenten des elektromagnetischen E-H-Feldes im Transportrohr (7) begrenzt.

20. Vorrichtung nach einem der Ansprüche 11 bis 19, **dadurch gekennzeichnet, dass** die Übertragungsmittel einen Wellenleiter (3) umfassen.

21. Vorrichtung nach einem der Ansprüche 11 bis 20, umfassend einen Mikrowellengenerator, der mit der Übertragungseinrichtung gekoppelt ist.

22. Vorrichtung nach Anspruch 21, umfassend eine Steuereinheit, die zum Steuern des Transportmittels, des Sendemittels und der Abstimmeinheit eingerichtet ist.

23. Vorrichtung nach Anspruch 22, **dadurch gekennzeichnet, dass** die Steuereinheit zur Angleichung der Modenfrequenz in der Mikrowellenkammer (1) an die Frequenz des Mikrowellengenerators eingerichtet ist.

24. Vorrichtung nach Anspruch 23, umfassend mindestens einen Impedanzsensor (5), Temperatursensor oder Leistungssensor.

25. Vorrichtung nach einem der Ansprüche 11 bis 24, umfassend eine Gaszugabeeinrichtung zum Einbringen von Gasen in das Transportrohr (7).

26. Vorrichtung nach einem der Ansprüche 11 bis 25, umfassend Mittel zur Erfassung von Schwefel zur Rückgewinnung von Schwefel aus der Verarbeitung mittels eines Extraktors, der an eines der Enden des Transportrohrs (7) gekoppelt ist.

27. Vorrichtung nach einem der Ansprüche 11 bis 26, umfassend einen Magneten oder Elektromagneten (13) am Ausgang der Kammer oder in ihrem letzten Segment, um die Magnetisierung aufrechtzuerhalten, die aus dem Rohmineral resultiert, das während des Abkühlens behandelt wird.

28. Verfahren zur selektiven Gewinnung von Metallen aus einem Rohmineral, umfassend eine Vielzahl von Vorrichtungen nach einem der Ansprüche 11 bis 27, die in Reihe angeordnet sind, um in jeder Vorrichtung mindestens eine Komponente des Rohminerals nacheinander zu behandeln.

## Revendications

1. Procédé sélectif d'extraction de métaux à partir d'un minerai brut, comprenant :
- une étape de chauffage électromagnétique dudit minéral brut avec des micro-ondes dans le champ magnétique dominant ou champ H, suivie d'une étape supplémentaire de chauffage diélectrique avec des micro-ondes dans le champ électrique dominant ou champ E, et une étape de chauffage diélectrique et magnétique simultanément avec des micro-ondes dans des champs électrique et magnétique alternatifs, ou champ E-H;
- une étape de chauffage électromagnétique dudit minéral brut avec des micro-ondes dans le champ H, suivie d'une étape de chauffage diélectrique et magnétique simultanément avec des micro-ondes dans le champ E-H;
ou
- une étape de chauffage électromagnétique dudit minéral brut à micro-ondes dans le champ H, suivie d'une étape supplémentaire de chauffage diélectrique et magnétique simultanément à micro-ondes dans le champ E-H et une étape de chauffage à micro-ondes dans le champ E;
**caractérisée en ce que** tous les champs électromagnétiques sont appliqués dans un applicateur monomode ouvert, et
la séparation des produits obtenus après chaque étape de chauffage par séparation magnétique de composants magnétisés de manière sélective est effectuée dans un processus à sec d'un système rotatif ouvert à flux continu.

2. Procédé selon la revendication 1, **caractérisé en ce que** ledit minéral brut contient un minerai monométallique polymétallique ou polyminéral.

3. Procédé selon la revendication 1, **caractérisé en ce que** lesdits minéraux bruts sont des déchets industriels.

4. Procédé selon l'une quelconque des revendications 1 à 3, comprenant l'addition de carbone en tant que composant réducteur audit minéral brut, préalablement à toute étape de traitement aux micro-ondes.

5. Procédé selon la revendication 4, **caractérisé en ce que** ledit carbone est du graphite, des humates, du noir de carbone ou des carbonates.

6. Procédé selon l'une quelconque des revendications 1 à 5, comprenant l'application d'un champ magnétique statique externe dans au moins une étape de traitement aux micro-ondes.

7. Procédé selon l'une quelconque des revendications 1 à 6, qui est mis en œuvre en atmosphère contrôlée.

8. Procédé selon la revendication 7, **caractérisé en ce que** ladite atmosphère contrôlée est une atmosphère anoxique en présence de N₂ ou de CO₂.

9. Procédé selon la revendication 8, comprenant une étape d'extraction de soufre élémentaire par condensation ou solidification des gaz extraits de ladite atmosphère anoxique.

10. Procédé selon l'une quelconque des revendications 1 à 9, **caractérisé en ce que** ledit applicateur monomode comprend des filtres à radiation dans au moins une extrémité.

11. Dispositif d'extraction sélective de métaux d'un minéral brut, comprenant :
- une chambre à micro-ondes (1) configurée pour confiner un champ électromagnétique monomode ayant une fréquence dans le domaine des micro-ondes, l'un de ses composants, E électrique ou magnétique H, étant dominant ou les deux composants étant alternatifs E-H, en fonction de la permittivité diélectrique complexe et propriétés de perméabilité magnétique du minéral brut,
- des moyens de transport pour transporter par agitation les particules du minéral brut à travers la chambre à micro-ondes (1) comprenant un tube de transport (7) et des moteurs de rotation (8) capables d'agiter les particules,
- des moyens de transmission configurés pour transmettre un champ électromagnétique ayant une fréquence dans le domaine des micro-ondes à l'intérieur de la chambre à micro-ondes (1),
- des moyens de séparation à la sortie de la chambre à micro-ondes (1) comprenant un séparateur magnétique (12),
- une unité d'accord (4) configurée pour accorder le mode du champ électromagnétique en modifiant la géométrie de la chambre à micro-ondes (1).

12. Dispositif selon la revendication 11, **caractérisé en ce que** les moyens de séparation sont basés sur la densité.

13. Dispositif selon la revendication 11, **caractérisé en ce que** les moyens de transport sont inclinables.

14. Dispositif selon la revendication 11 ou 13, **caractérisé en ce que** les moyens de transport comprennent un moteur à vibrations (9) pour agiter les particules dans leur mouvement.

15. Dispositif selon l'une quelconque des revendications 11 à 14, comprenant des filtres couplés (2) pour empêcher les fuites de rayonnement lorsque la chambre à micro-ondes (1) est ouverte.

16. Dispositif selon l'une quelconque des revendications 11 à 15, **caractérisé en ce que** l'unité d'accord (4) comprend un court-circuit glissant pour régler la géométrie de la chambre à micro-ondes (1).

17. Dispositif selon l'une quelconque des revendications 11 à 16, **caractérisé en ce que** la chambre à micro-ondes (1) a une géométrie confinant au moins un maximum de la composante magnétique H du champ dans le tube de transport (7).

18. Dispositif selon l'une quelconque des revendications 11 à 17, **caractérisé en ce que** la chambre à micro-ondes (1) a une géométrie confinant au moins un maximum de la composante électrique E du champ dans le tube de transport (7).

19. Dispositif selon l'une quelconque des revendications 11 à 18, **caractérisé en ce que** la chambre à micro-ondes (1) a une géométrie confinant les maximums alternatifs des composants du champ électromagnétique E-H dans le tube de transport (7).

20. Dispositif selon l'une quelconque des revendications 11 à 19, **caractérisé en ce que** les moyens de transmission comprennent un guide d'ondes (3).

21. Dispositif selon l'une quelconque des revendications 11 à 20, comprenant un générateur de micro-ondes couplé aux moyens de transmission.

22. Dispositif selon la revendication 21, comprenant une unité de commande configurée pour commander les moyens de transport, les moyens de transmission et l'unité d'accord.

23. Dispositif selon la revendication 22, **caractérisé en ce que** l'unité de commande est configurée pour égaliser la fréquence de mode dans la chambre à micro-ondes (1) à la fréquence du générateur de micro-ondes.

24. Dispositif selon la revendication 23, comprenant au moins un capteur d'impédance (5), un capteur de température ou un capteur de puissance.

25. Dispositif selon l'une quelconque des revendications 11 à 24, comprenant des moyens d'addition de gaz pour incorporer des gaz à l'intérieur du tube de transport (7).

26. Dispositif selon l'une quelconque des revendications 11 à 25, comprenant des moyens de capture du soufre pour récupérer le soufre du traitement au moyen d'un extracteur couplé à l'une des extrémités du tube de transport (7).

27. Dispositif selon l'une quelconque des revendications 11 à 26, comprenant un aimant ou un électroaimant (13) à la sortie de la chambre ou dans son segment final, pour maintenir l'aimantation résultant du minéral brut traité lors de son refroidissement.

28. Système pour l'extraction sélective de métaux d'un minéral brut, comprenant une pluralité de dispositifs selon l'une quelconque des revendications 11 à 27, agencés en série pour traiter séquentiellement dans chaque dispositif au moins un composant du minéral brut.
